# FASCICULE DE BREVET EUROPEEN

(11) **EP 0 746 519 B1**
(45) Date de publication et mention de la délivrance du brevet: **28.01.1998**
(21) Numéro de dépôt: 95910586.7
(22) Date de dépôt: 23.02.1995
(51) Int. Cl.: B65G 37/02, B07C 5/36, B07B 13/00

(54) **INSTALLATION ROBOTISEE DE PRELEVENENT ET DE TRANSFERT DE BACS**
ROBOTERANLAGE ZUM ENTNEHMEN UND FÖRDERN VON BEHÄLTERN
ROBOTIC APPARATUS FOR PICKING UP AND TRANSFERRING TRAYS

(30) Priorité: 25.02.1994 FR 9402424
(43) Date de publication de la demande: 11.12.1996
(73) Titulaire: KAUFLER SA, F-22602 Loudeac (FR)
(72) Inventeur: BERNARD, Jean-Marc, F-74410 Saint-Jorioz (FR); CHAMPALAUNE, Jean-Claude, F-35590 Saint-Méen-le-Grand (FR); CORVELLER, Yvon, F-56300 Pontivy (FR)
(74) Mandataire: Le Faou, Daniel
(86) Numéro de dépôt international: FR9500211
(87) Numéro de publication internationale: WO9523104

(56) Documents cités:
- EP-A- 0 354 009
- DE-A- 3 917 485
- GB-A- 2 109 762
- US-A- 3 782 565

## Description

La présente invention concerne une installation robotisée servant à prélever et à transférer des bacs d'au moins un poste de tri vers des postes d'affectation.

L'invention a été conçue plus particulièrement dans le cadre du travail de désossage, de parage et de pièçage de viandes sur une ligne accueillant plusieurs opérateurs.

Dans un système connu, les viandes sont désossées et/ou parées et/ou piècées sur des plans de travail ou sur la bande d'un convoyeur le long duquel se placent les opérateurs. Les coproduits, c'est-à-dire les différents produits résultants des opérations, tel que des muscles de différente nature, les gras, les couennes, les os, les aponévroses, etc. sont triés par les opérateurs en cours d'opération et évacués puis collectés de façon différenciée à l'aide de plusieurs autres convoyeurs, par exemple à bande sans fin.

Avec ce type de système, il se pose des problèmes de contamination, particulièrement bactériologique, dûs au fait que les bandes sans fin ne peuvent pas être nettoyées de façon continue, efficacement. Un autre inconvénient de ce système connu est qu'il est impossible d'identifier et de contrôler la qualité et la quantité de travail de chaque opérateur en raison de la confusion que les collectes introduisent, ni de mettre en place un traçage de la production dans un souci de qualité.

Dans un autre système connu, les coproduits sont principalement évacués dans des bacs généralement en plastique pouvant contenir par exemple de dix à cinquante kilogrammes de produit. Ces bacs sont placés en nombre suffisant à portée des opérateurs pour que chacun puisse trier et différencier les coproduits résultant de l'opération.

Les bacs sont régulièrement évacués, en particulier lorsqu'ils sont pleins, par des convoyeurs à bande, à chaîne ou à rouleau, ou encore sont collectés à chaque poste par un opérateur chargé de cette tâche. Dans ce cas, et notamment lorsqu'une ligne comporte de nombreux opérateurs et que ceux-ci doivent différencier un grand nombre de coproduits, il est impossible d'indiquer avec certitude, après collecte des bacs, l'identité de ces bacs, c'est-à-dire de savoir quel est l'opérateur qui l'a rempli et quel en est exactement son contenu ou le type de coproduits qu'il contient. Cette remarque est également vraie si les bacs sont collectés par des convoyeurs.

On comprend qu'ainsi, si une ligne comporte par exemple douze opérateurs avec chacun six types de coproduits différents, il y aura un grand nombre de convoyeurs et l'ensemble sera par conséquent difficile à contrôler et à nettoyer, d'autant qu'il faut également faire revenir les bacs vides à disposition de chaque opérateur. En effet, très souvent les entrepnses pratiquant ces transformations de désossage, parage et pièçage souhaitent grouper les coproduits en unités plus importantes, par exemple de masse allant de 200 à 1 000 kilogrammes, ou encore souhaitent orienter les coproduits vers une autre transformation qui impose que les coproduits soient vidés de leur bac. Par ailleurs, l'opération manuelle qui consiste à vider et/ou transvaser les bacs est pénible et engendre à nouveau un risque d'erreurs, par exemple dans les saisies de poids. On peut donc constater que dans ce deuxième système connu, même si on dispose de davantage de possibilités de maintien des éléments en contact avec les coproduits dans un état de propreté convenable (puisque les bacs peuvent être nettoyés avant d'être ramenés sur les lignes) on rencontre encore beaucoup de difficultés pour effectuer avec certitude les contrôles quantitatif et qualitatif et assurer un bon traçage de la production.

L'état de la technique en la matière peut être illustré par le document GB-A-2 109 762 qui a pour objet une méthode et une installation pour trier et classer des poissons. Ces opérations se font manuellement, le poste de tri comprenant un plan de saisie apte à recevoir côte-à-côte un ensemble de bacs contenant des poissons d'espèce ou de catégorie différentes, un convoyeur étant prévu qui permet d'évacuer les bacs pleins du poste de tri vers des postes d'affectation, le transfert de ces bacs sur le convoyeur se faisant par gravité.

On connaît par ailleurs - par exemple par le document US-A-3 782 565 - des installations automatisées pour la manutention de bacs, notamment pour le stockage/déstockage de bacs en magasin, qui comprennent un chariot mobile suivant trois directions orthogonales (X, Y, Z), dont les positions de départ et d'arrivée sont programmées, l'installation étant pilotée par une unité de contrôle logique.

Une telle installation permet donc uniquement d'aller chercher successivement, de manière programmée, un bac donné pour le transférer d'un endroit de saisie prédéterminé à un endroit de dépose également prédéterminé.

Elle n'est donc pas applicable à une opération de tri telle que mentionnée plus haut, qui implique un remplissage aléatoire des différents bacs collecteurs et donc un endroit de saisie qui à chaque fois ne peut pas être déterminé d'avance, ainsi que - corrélativement - un poste d'affectation qui est également initialement indéterminé puisque ce poste est dépendant du bac concerné.

L'installation qui fait l'objet de la présente invention se propose d'éviter les inconvénients qui viennent d'être mentionnés.

Elle est destinée au prélèvement et au transfert de bacs d'au moins un poste de tri, par exemple un poste de désossage, parage et pièçage de viande, vers des postes d'affectation, le poste de tri comprenant un plan de saisie apte à recevoir côte-à-côte un ensemble de bacs contenant des objets de nature et/ou de catégorie différentes, ces objets étant, dans le cas du travail de la viande, des coproduits résultant de l'opération de désossage, parage et pièçage.

Cette installation est remarquable par le fait qu'elle est contrôlée et gérée par un système informatique à micro-processeur ou processeur et qu'elle comporte au moins un robot préhenseur piloté par ce micro-processeur, qui est mobile sur une voie de guidage constituée par un rail s'étendant le long du plan de saisie, et apte à y prélever individuellement lesdits bacs et les transférer sélectivement vers les différents postes d'affectation, ledit robot comprenant un chariot qui porte un moteur électrique à contrôle de position, assurant son déplacement le long du rail, ce chanot étant muni en outre d'un détecteur de proximité apte à provoquer son arrêt automatique en face d'un bac en attente sur le plan de saisie, en vue du prélèvement de ce bac, de telle sorte que l'endroit duquel est saisi le bac soit connu du système informatique par l'intermédiaire du moyen de contrôle de position dudit moteur électrique.

Par ailleurs, selon un certain nombre de caracténstiques avantageuses, non limitatives, de l'invention :
- l'installation comprend au moins un moyen détecteur connecté au micro-processeur, qui permet de détecter qu'un ou plusieurs bac(s) se trouve(nt) présent(s) en position d'attente sur le plan de saisie ;
- le rail est rectiligne, ou sensiblement rectiligne, et que le poste de tri comporte un plan de travail et un plan de pose des bacs, les bacs pleins étant déplacés du plan de pose au plan de saisie suivant une direction transversale, perpendiculaire à l'axe du rail ;
- le robot comprend un chariot portant un moteur électrique à contrôle de position, qui assure son déplacement le long du rail ;
- le chariot porte des galets de roulement assurant son maintien sans jeu et son guidage sur le rail ;
- le chariot est déplacé sur le rail au moyen d'un pignon rotatif entraîné par le moteur, qui engrène avec une crémaillère solidaire du rail ;
- le chariot affecte la forme d'un plateau horizontal dont la face supérieure (310) est adaptée pour recevoir et supporter les bacs ;
- le chariot comprend des moyens de chargement et de déchargement des bacs sur ladite face réceptrice ;
- les moyens de chargement comprennent un doigt escamotable, mobile transversalement dans un plan horizontal situé au-dessus de ladite face, à une distance de celle-ci qui coïncide, au jeu d'escamotage près, à la hauteur des bacs, le chargement d'un bac sur le chariot se faisant par accrochage et traction du doigt contre le bord supérieur du bac ;
- les moyens de déchargement consistent en un poussoir axialement mobile ;
- le poste de tri comporte un deuxième plan de pose destiné à recevoir des bacs vides ;
- le robot est adapté pour ramener les bacs vides d'un poste d'affectation au deuxième plan de pose ;
- le robot est adapté pour retourner les bacs en vue de leur vidage aux postes d'affectation ;
- il est prévu un robot unique ;
- il est prévu plusieurs robots, travaillant à la suite l'un de l'autre ; dans ce cas, de préférence il est prévu un premier robot prélevant les bacs aux postes de tri et les amenant à un poste de pesée et un second robot qui les transfère du poste de pesée aux postes d'affectation.

Au vu de la description qui précède, on comprend que, dans le cas d'un dispositif de désossage et/ou parage et/ou pièçage des viandes, organisé dans une ligne, comprenant un ou plusieurs postes, chaque poste est conçu ergonomiquement et comporte suffisamment de supports pour y placer un bac pour chaque coproduit résultant de l'opération qui s'y déroule, chacun de ces bacs étant déplacés par l'opérateur, par exemple lorsqu'il est plein ou lorsqu'il a un contenu suffisant, par simple glissement dans une position voisine de la précédente telle qu'à cet endroit (c'est-à-dire sur le plan de saisie) le bac puisse être prélevé par le robot, l'endroit de saisie étant connu de ce dernier, après quoi le robot est capable de le transporter jusqu'à l'extrémité de la ligne, et de le déposer par exemple sur un système de pesage, de le reprendre après pesée, et de le vider dans un autre plus grand récipient connu de lui ou en tout autre endroit d'affectation connue de lui. Ensuite, le robot est capable de déposer le bac ainsi vidé dans un dispositif de lavage, puis de le reprendre à l'issue du lavage et d'aller le déposer en un autre endroit, par exemple à un niveau supérieur à celui auquel il opère la saisie des bacs pleins ou ayant un contenu suffisant, et à proximité de chaque opérateur. Le robot est aussi capable, de préférence, de prendre le plan de travail de chaque opérateur et, dans une procédure connue de lui, de l'amener au dispositif de lavage puis de le reprendre et de le restituer aux opérateurs, ceci dans un souci d'ordre sanitaire.

Ainsi, sous réserve d'initier la production désirée en convenant des positions des bacs, et en indiquant au robot le type et la procédure correspondant à la production désirée, on aura la certitude de disposer de moyens de contrôler la qualité et la quantité produites par chaque opérateur, de tracer la production désirée, et en tout cas d'effectuer les saisies d'informatiques sûres qu'un logiciel informatique adapté pourra traiter afin d'établir différents états souhaités par l'entreprise, tel que le rendement quantitatif des opérations, lequel est le rapport du poids total des muscles (qui est un coproduit) divisé par le poids total brut du lot objet de la production, ceci étant donné à titre d'exemple car beaucoup d'autres calculs et d'états sont possibles dès lors que les données brutes sont collectées avec certitude et sans le risque de confusion lié à un convoyage à bandes mobiles ou à une collecte manuelle.

D'autres caractéristiques et avantages de l'invention apparaîtront de la description et des dessins annexés qui en représentent, à simple titre d'exemple non limitatif, des modes de réalisation préférés.

Sur ces dessins :
- la figure 1 est une vue générale très schématique, en plan, d'un premier mode de réalisation de l'invention ;
- la figure 2 représente en plan une vue agrandie de quelques postes de travail de cette même installation ;
- la figure 3 représente en élévation un poste de travail de l'installation ;
- la figure 4 est une vue schématique similaire à la figure 1 représentant un deuxième mode de réalisation de l'installation, qui utilise plusieurs robots ;
- la figure 5 est une vue de face de l'installation schématique de la figure 4, les postes de travail n'y étant pas représentés ;
- la figure 6 est une vue en coupe transversale d'un mode de réalisation possible du robot préhenseur ;
- la figure 7 est une vue de côté du robot de la figure 6, coupé par le plan brisé vertical VII-VII ;
- les figures 8 et 9 sont des vues schématiques illustrant l'opération de chargement d'un bac sur le robot des figures 6 et 7 ;
- la figure 10 est une vue schématique illustrant l'opération de déchargement du bac à un poste de pesée ;
- la figure 11 est une vue schématique en élévation et partiellement coupée d'un deuxième mode de réalisation de robots préhenseur, ce dernier étant capable de retourner les bacs ;
- la figure 12 est une vue de côté, partiellement coupée du robot de la figure 11 ;
- la figure 13 est un schéma illustrant l'architecture du système informatique qui pilote le robot, contrôle et gère l'installation.

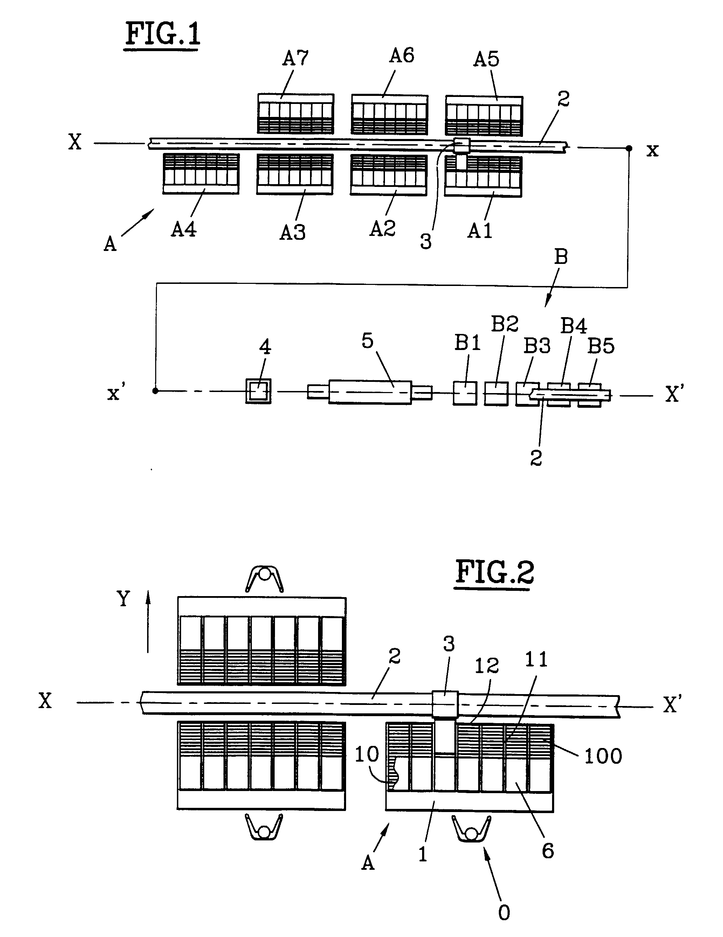

L'installation représentée sur les figures 1 à 3 d'une part et 4 et 5 d'autre part concerne l'industrie de la viande.

Des pièces entières de viande de boucherie, par exemple des demi-carcasses ou des quartiers d'animal abattu sont traitées manuellement à des postes de travail par des ouvriers spécialisés, dont la tâche consiste à désosser les pièces de viande pour en séparer et trier les différents morceaux.

Ces postes de travail - référencés **A** sur les figures - seront appelés de manière générique "postes de tri", car l'invention peut trouver application dans des domaines variés de l'industrie, une opération préalable du type désossage n'étant pas forcément requise. Les morceaux triés sont placés dans des bacs en fonction de leur nature et, lorsqu'un bac est plein, il est acheminé vers un poste d'affectation - référencé **B** -.

Les postes d'affectation sont notamment des postes de récupération des morceaux de viande, où sont placés des conteneurs ayant un volume beaucoup plus grand que celui des bacs ; dans ces conteneurs sont déversés les contenus des bacs qui contiennent des morceaux de même nature ou de même catégorie, mais qui proviennent de différents postes de tri.

L'installation illustrée aux figures 1 à 3 est disposée suivant une ligne **XX'**, cette ligne ayant été coupée sur la figure 1 artificiellement, pour raison d'encombrement du dessin ; en réalité, les points de séparation **x** et **x**' des parties supérieure et inférieure de cette figure constituent un seul et unique point.

La partie amont de la ligne, où s'effectue le désossage, est située sur la gauche de la figure.

Dans le mode de réalisation illustré, l'installation comprend quatre postes de tri **A**, référencés A1 à A7. Quatre d'entre eux (A à A4) sont situés du même côté de l'axe **XX**', et dans l'alignement l'un de l'autre, tandis que les trois autres (A5 à A7) sont situés de l'autre côté, également dans l'alignement l'un de l'autre. Ils se trouvent en vis-à-vis deux à deux (A1 en face de A5, A2 en face de A6, A3 en face de A7, et A4 tout seul).

Chacun des postes **A**, comme on le voit notamment à la figure 2, comporte un plan de travail 1, éventuellement subdivisé en plusieurs parties non représentées, ainsi qu'un plan de pose 10 pour une quantité suffisante de bacs 6, ces plans de pose étant par exemple équipés de rouleaux d'appui 100, et étant séparés par des guides 11; il comporte en outre un plan de saisie 12 pour un nombre identique de bacs à celui du plan de pose 10, ayant lui-même les mêmes caractéristiques que le plan 10, un bac pouvant rouler ou glisser du plan 10 au plan 12 si l'opérateur l'y pousse après avoir éventuellement débloquée une butée non représentée qui jusque là empêchait le bac d'aller du plan 10 au plan 12.

Lorsqu'il est suffisamment plein, le bac ainsi déplacé se trouve alors, en partie en raison de la présence des guides 11, dans une position déterminée sur le plan 12, et est saisissable par un robot 3 muni d'un préhenseur 30 tel qu'une pince.

Selon une caractéristique essentielle de l'invention, ce robot 3 circule sur un axe horizontal longitudinal 2 - parallèle à **XX**' - le long des postes de travail **A**, entre les séries de postes A1 à A4 et A5 à A7.

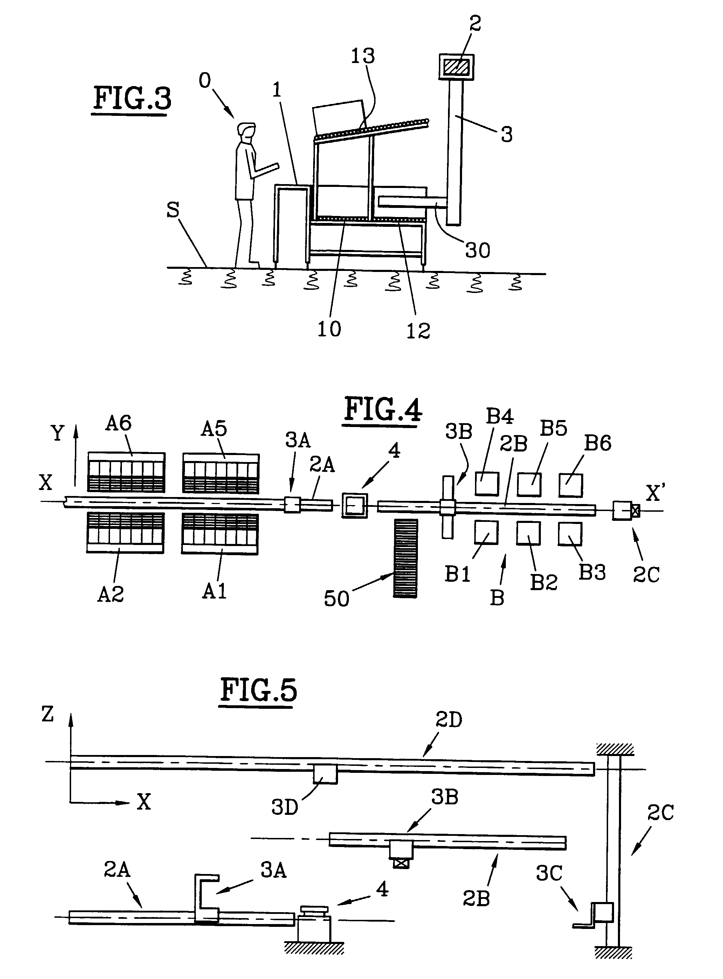

L'axe 2 est par exemple une voie aérienne (voir figure 3) à laquelle est suspendu le robot préhenseur 3.

L'installation comprend, également desservie par le robot 3, une balance électronique 4, un dispositif de lavage 5, et un certain nombre de postes d'affectation **B**, par exemple cinq postes référencés B1 à B5.

En cours de travail, le robot préhenseur 3 va placer le bac qu'il a prélevé, en un endroit précis de l'un des postes de tri, sur la balance 4 ; il va ensuite le reprendre et le vider dans l'une ou l'autre des affectations B1 à B5, le préhenseur ayant suivant des principes connus en soi la faculté de retourner le bac pour le vider tout en le maintenant saisi ; après vidage, le robot va placer le bac vide sur le dispositif de lavage 5, ce dernier étant de type connu par exemple sous la forme d'un tunnel muni d'un convoyeur ; le robot va reprendre le bac propre à l'issue du lavage et le ramener sur un plan de stockage 13 (voir figure 3) à proximité d'un opérateur.

Ce plan de stockage est de préférence placé au-dessus des plans 10 et 12, ce qui rend aisé la prise manuelle d'un nouveau bac par l'opérateur.

Le robot est piloté par une commande numérique, et connaît toutes les positions de bacs, celle d'origine mais aussi intermédiaire et finale, ainsi que les données s'y rattachant, y compris celles concernant les affectations. Le robot sera alerté du besoin d'évacuer un bac quelconque par un dispositif commun tel qu'un capteur ou une cellule optique, et il va gérer ses différentes missions suivant des priorités programmées, comme par exemple ne pas attendre la fin de l'opération de lavage d'un bac, mais plutôt pendant ce temps d'aller effectuer une autre opération comme chercher un bac ou le rapporter.

Contrairement à l'installation illustrée aux figures 1 à 3 qui est équipée d'un robot unique, celle des figures 4 et 5 comprend plusieurs robots 3A à 3D travaillant à la suite l'un de l'autre.

A la figure 4 on a représenté uniquement les quatre postes de tri A1, A2, A5 et A6.

Un premier robot 3A, circulant sur une voie de guidage 2A d'axe **XX** ' a pour fonction de prélever les bacs au poste de tri pour les amener sur la balance 4.

Un autre robot 3B, qui circule sur une voie de guidage 2B a pour fonction de prélever les bacs sur la balance 4, pour les acheminer vers les postes d'affectation **B** et y vider le contenu, par retournement du bac.

Comme on le voit à la figure 4, les postes d'affectation B1 à B6, sont répartis en deux ensembles de trois postes, situés de chaque côté de la voie 2B.

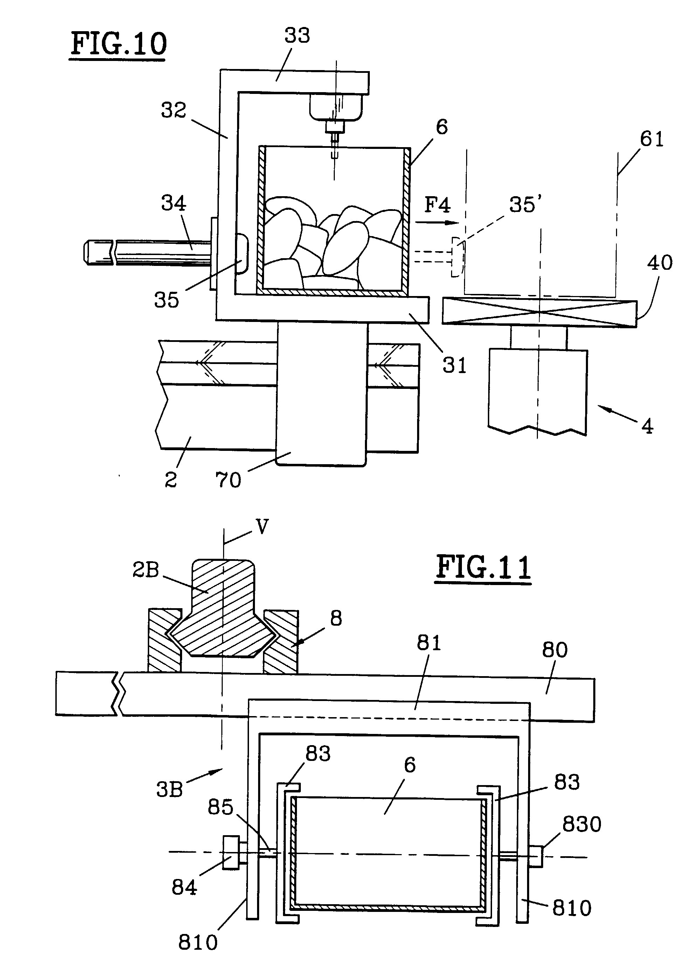

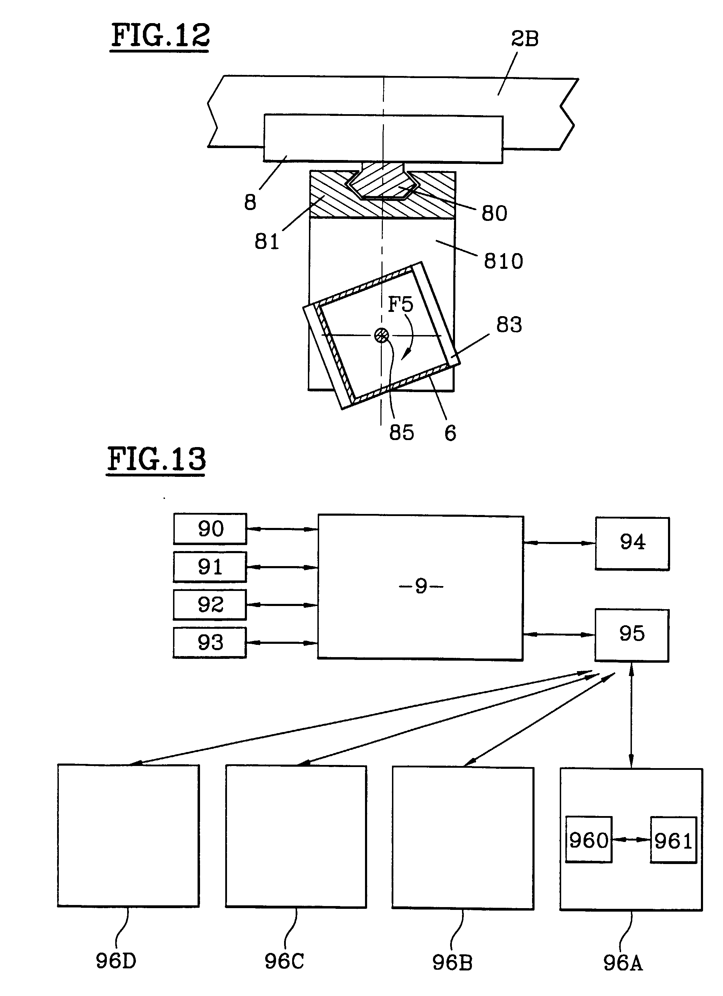

Comme on le verra plus loin, en référence notamment aux figures 11 et 12, le robot 3B peut non seulement transporter un bac suivant la direction longitudinale de la voie de guidage 2B (parallèlement à **XX**'), mais aussi le transférer transversalement, selon une direction **Y** orthogonale par rapport à **XX**'. Cette faculté de déplacement transversal lui permet de positionner les bacs au-dessus des postes d'affectation, lesquels sont situés sur les côtés de la voie 2B.

Le robot 3D, guidé sur une voie de roulement 2D, également parallèle à **XX**', a pour fonction de ramener les bacs vides aux postes de tri.

Un robot intermédiaire 3C, qui circule sur une voie de roulement verticale 2C, sert à transférer, suivant une direction verticale **Z**, les bacs vides du robot 3B au robot 3D.

Comme on le voit à la figure 5, les trois voies de guidage 2A, 2B et 2D sont horizontales, situées dans un plan vertical commun, mais sont placées à des hauteurs différentes.

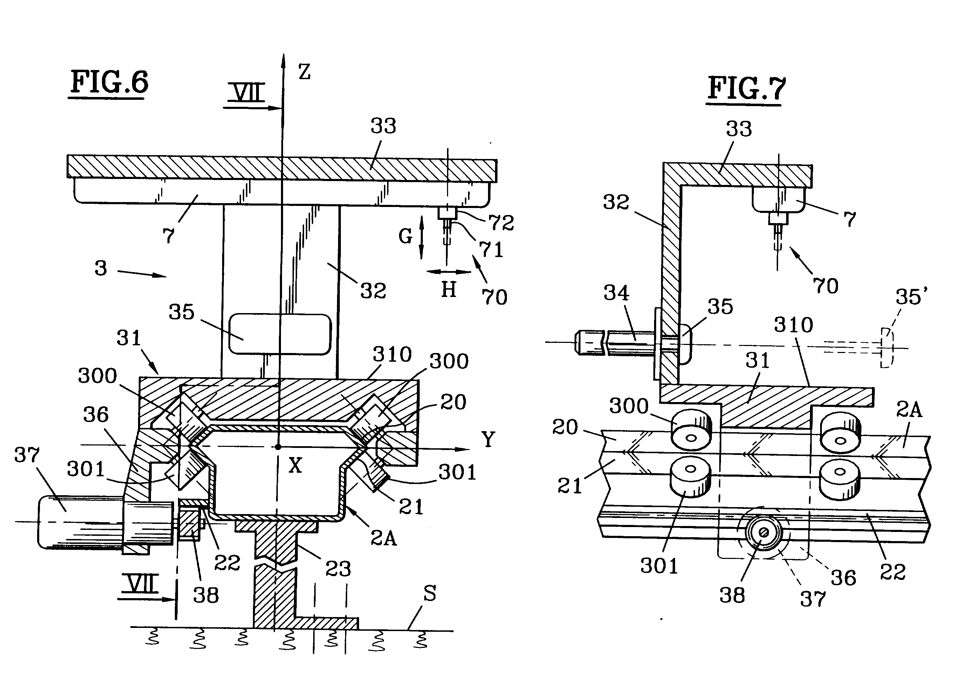

Comme on le verra plus loin, en référence notamment aux figures 6 à 10, le robot 3A a la forme générale d'un plateau à col de cygne, qui repose sur la voie de guidage 2A.

En revanche, le robot **B** est suspendu à la voie de guidage 2B, ce qui explique le décalage en hauteur des deux voies de guidage.

De même, le robot 3D est suspendu à la voie 2D, qui se trouve encore à un niveau supérieur car les bacs vides doivent être ramenés sur les plans de stockage 13 des postes de travail, plans qui se trouvent dans une position surélevée.

Le robot 3 représenté aux figures 6 à 9 est le premier robot, référencé 3A sur les figures 4 et 5.

Il s'agit d'un chariot comprenant un plateau horizontal 31 sous lequel sont montées quatre paires de galets 300, 301, coopérant avec des flancs latéraux inclinés 20, 21 de la voie de roulement - ou rail - 2A ; celle-ci consiste en une poutre tubulaire rigide et massive en acier inoxydable, fixée au sol **S** par des pieds 23.

De manière connue, les flancs latéraux 20-21 forment des dièdres dont l'arête est dirigée vers l'extérieur. Les galets s'appliquent avec une certaine pression contre ces flancs, ce qui élimine tout jeu et permet un roulement doux et régulier du chanot le long de la poutre.

Au plateau 31 est fixée une console 36 dirigée vers le bas, sur laquelle est monté un moteur électrique 37 dont l'arbre de sortie porte un pignon 38 engrenant avec une crémaillère 22 s'étendant parallèlement à **XX**', le long du rail 2A dont elle est solidaire.

On comprend donc qu'en mettant en marche le moteur 37, dans un sens ou dans l'autre, on déplace axialement le chariot 31 sur le rail 2A, dans un sens ou dans l'autre.

La face supérieure 310 du chariot 31 est plane et horizontale, et possède un contour rectangulaire ; comme on le verra par la suite, elle sert à recevoir et supporter les bacs au cours de leur transfert.

Sur l'un des bords transversaux du chariot est fixée une plaque verticale 32 dressée vers le haut, et dont la partie supérieure se raccorde à une plaque horizontale transversale 33 ; celle-ci surplombe la face 310, à une distance de celle-ci légèrement supérieure à celle des bacs.

Sous cette plaque supérieure 33 est fixé un vérin sans tige 7 dont l'élément mobile 70 peut se déplacer horizontalement et transversalement (suivant l'axe **Y**). La longueur, en direction transversale, de la plaque 33 et du vérin sans tige 7 est plus grande que la dimension correspondante du chariot 31, si bien que dans ses positions extrêmes, l'élément 70 vient se positionner à l'extérieur de la face 310, d'un côté ou de l'autre de celle-ci.

La faculté de déplacement, dans un sens ou dans l'autre, de l'élément 70 est symbolisée par la double flèche **H** à la figure 6.

Cet élément 70 comprend un vérin 72 dont la tige 71, appelée doigt, est mobile en direction verticale, comme symbolisé par la double flèche G. Au dos de la plaque verticale 32 est fixé un vérin 34, par exemple un vérin pneumatique à double effet, dont la tige est pourvue d'un poussoir 35 mobile axialement, c'est-à-dire parallèlement à l'axe **XX**'. A la figure 7, la position d'extension du vérin, dans laquelle le poussoir est référencé 35', est figurée en traits interrompus.

Le vérin sans tige est de préférence un vérin pneumatique, par exemple du type disponible dans le commerce sous la marque BOSCH et la référence commerciale PZ 25 ou PZ 40.

Le moteur 37 est un moteur électrique à contrôle de position, par exemple du type sans balai ayant un système régulateur ou de codage (en anglais : moteur "BRUSHLESS" avec "RESOLVER") pour la commutation et le positionnement angulaire. Un tel moteur est par exemple disponible dans le commerce sous la référence commerciale D 314 L 20 du constructeur MOOG.

Il a une puissance et une vitesse suffisantes pour déplacer très rapidement le chariot sur son rail, et des couples d'accélération et de décelération élevés.

Grâce au système régulateur, la position angulaire du rotor du moteur par rapport au stator est parfaitement connue en permanence, et cette information est envoyée au micro-processeur qui pilote l'installation. Corrélativement, la position longitudinale du chariot selon **XX** ' est donc également parfaitement connue et contrôlée.

Le rail 2A et le chariot 31 sont positionnés et dimensionnés de telle manière que le plan de la face 310 soit très légèrement plus bas que le plan de saisie 12. A titre indicatif, ces plans se trouvent à une hauteur de l'ordre de 0,60 m au-dessus du sol.

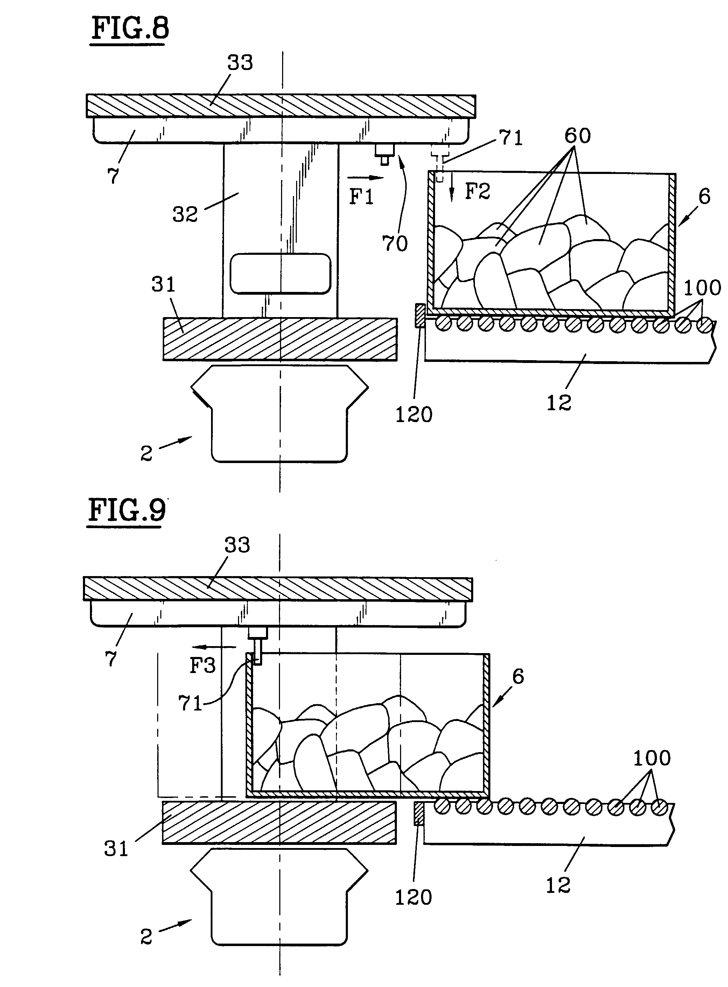

La face 310 possède des dimensions qui correspondent sensiblement à la longueur des bacs, et la disposition des postes de tri est telle que les bords latéraux du chariot passe à faible distance des plans de saisie 12, comme cela est visible aux figures 8 et 9 où un plan 12 a été représenté.

La dimension longitudinale (selon **XX**') de la face réceptrice 310 correspond sensiblement à la largeur des bacs 6.

Les bacs utilisés sont par exemple des bacs en plastique standard, de longueur 600 mm, de largeur 400 mm, et de hauteur 250 mm.

A la figure 8, on a représenté un bac 6, contenant un nombre suffisant de morceaux de viande 60, en position d'attente d'enlèvement sur le plan de saisie 12. Une butée appropriée 120 empêche son échappement en direction transversale, vers la voie de guidage 2.

De préférence, il est prévu de chaque côté de l'axe **XX'** une détection linéaire, par exemple au moyen d'un système opto-électronique balayant une ligne de l'espace parallèle à **XX'**, située au-dessus des plans de saisie 12.

Ainsi, chaque ensemble latéral de postes de tri (A1 à A4 d'une part et A5 à A7 d'autre part) sera doté d'un détecteur de présence d'au moins un bac en position d'attente.

Lorsqu'une information de présence d'un bac au moins est donnée par le système de détection au micro-processeur, celui-ci va demander au robot de venir chercher le bac (ou les bacs).

Le chariot 31 est avantageusement muni d'un détecteur de proximité apte à coopérer avec une pièce métallique garnissant la butée 120.

Lorsque celle-ci se trouve dans sa position active, de la figure 8, la détection de proximité s'opère, et le chariot s'arrête automatiquement en face du bac en attente.

Le processeur va alors commander le vérin sans tige 7, pour déplacer l'élément de préhension 70 en direction du bac en attente, comme illustré par la flèche F1 à la figure 8. Initialement le doigt 71 se trouve en position escamotée (vérin 70 rétracté) ce qui lui permet de franchir le bord supérieur du bac.

La position de fin de course latérale de l'élément 70, illustrée en traits interrompus à la figure 8, est telle qu'il se trouve à l'aplomb de l'intérieur du bac. Le vérin 70 est alors mis en extension, provoquant avec lui l'extension du doigt 71, verticalement vers le bas, comme symbolisé par la flèche F2.

On opère ensuite l'escamotage de la butée 120 et l'actionnement en sens inverse du vérin sans tige 7. Le doigt 71 accroche alors la paroi du bac pour le tirer sur le plateau 31 comme illustré par la flèche F3 sur la figure 9, jusqu'à ce que le bac 6 soit parfaitement centré sur la face d'appui 310 (position représentée en traits interrompus mixtes à la figure 9). Enfin, le doigt 71 est rétracté.

Le chariot est alors déplacé pour amener le bac jusqu'à l'extrémité aval de la voie de guidage, extrémité où se trouve le dispositif de pesage 4.

Comme on le voit à la figure 10, le dispositif 4 comprend un plateau horizontal 40 dont la face supérieure se trouve sensiblement dans le même plan (ou dans un plan légèrement plus bas) que la face 310. Lorsque le chariot s'est arrêté en vis-à-vis du plateau de pesé 40, le vérin 34 est mis en extension, de sorte que le bac 6 est repoussé axialement par le poussoir 35 et est transféré sur le plateau 40, comme cela est symbolisé par la flèche F4 à la figure 10, dans une position référencée 61.

Le résultat de la pesée est une information qui est transmise au micro-processeur assurant la gestion de la production.

En référence aux figures 11 et 12, nous allons maintenant décrire la structure du robot suivant, 3B.

Ce dernier comprend un chariot 8, qui est suspendu à la voie de roulement 2B, laquelle consiste en un rail similaire au rail 2A du premier robot, mais retourné. Il est fixé à une structure aérienne non représentée par des moyens de suspension appropriés, qui ne sont pas non plus représentés.

Le robot 3B comprend un chariot 8 guidé sur le rail 2B, à l'aide de galets similaires à ceux du premier robot, mais non représentés sur les vues schématiques des figures 11 et 12 afin de ne pas les alourdir inutilement.

Le chariot 8 supporte lui-même un rail 80, de forme similaire au rail 2B, mais disposé transversalement par rapport à lui, c'est-à-dire parallèle à l'axe **Y**.

Le rail 80 s'étend symétriquement de chaque côté du plan vertical médian **V** de la voie 2B (voir figure 2B).

Sur ce rail coulisse un second chariot 81 pourvu d'une paire de plaques latérales verticales 810 parallèles au plan **V**, formant ainsi un étrier en forme générale de "U" renversé.

A l'intérieur des bras 810 sont montées une paire de mâchoires 83 dont l'une au moins peut être déplacée transversalement par un vérin 830 ce qui permet en rapprochant les mâchoires d'enserrer un bac 6.

Les mâchoires 83 sont articulées par rapport aux plaques 810 suivant un axe transversal horizontal (axe parallèle à l'axe **Y**).

L'une des mâchoires 83 (côté vérin 830) est folle en rotation, tandis que l'autre est solidaire d'un arbre 85 entraîné positivement en rotation par un moteur 84 ou un vérin pneumatique rotatif.

A la simple observation de la figure 11, on comprend comment le robot 3B est capable de saisir un bac 6 par ses faces latérales, en rapprochant l'une de l'autre les mâchoires 83 (à l'aide du vérin 830). A l'observation de la figure 12, on comprend aussi comment, une fois que le bac a été emprisonné entre les mâchoires, on peut le faire pivoter à l'aide du moteur 84 pour le renverser et le vider, ce mouvement étant symbolisé par la flèche F5 à la figure 12.

Le déplacement du chariot 8 sur la voie de guidage 2B ainsi que le déplacement du chariot 81 sur le rail 80, peuvent être réalisés à l'aide de moteurs électriques similaires au moteur 37 équipant le premier robot, via une transmission pignon/crémaillère.

Le déplacement du chariot 8 le long de la voie 2B permet d'amener les bacs préalablement pesés en regard d'une paire de postes d'affectation, par exemple - si on se réfère à la figure 4 - en correspondance avec la paire de postes B2 et B5, postes qui peuvent être des conteneurs de grandes dimensions.

Le chariot 81 est alors déplacé latéralement, au poste B2 ou au poste B5 selon l'affectation souhaitée, après quoi s'opère le vidage du bac.

Une fois cette opération effectuée, le chariot 81 est ramené dans sa position centrale, et le chariot 8 est amené à l'extrémité aval de la voie 2B.

Il est alors pris en charge par le robot ascenseur 3C. Celui-ci peut être de type relativement élémentaire, comprenant simplement un plateau récepteur mobile verticalement

Le robot 3C amène le bac vide en position haute, en un emplacement permettant sa saisie par le robot 3D.

Ce dernier peut être également d'une conception assez élémentaire, sous forme d'un chariot muni d'une ventouse mobile transversalement et apte à saisir le bac vide, le transporter le long de la voie 2D vers la partie amont de celle-ci, puis le transférer latéralement sur un plan de stockage des bacs vides tel que le plan désigné 13 à la figure 3.

On notera à la figure 4, la présence d'un élément référencé 50 en aval du poste de pesage 4. Il s'agit par exemple d'une voie de roulement sur laquelle sont évacués certains bacs que l'on veut intercepter, au lieu de les acheminer vers les postes d'affectation B1 à B6.

Il serait possible de prévoir, avantageusement, un poste de lavage des bacs vides, ce poste - manuel ou non - pouvant être approvisonné par le robot 3B pour être repris ensuite par le robot 2C.

Le schéma de la figure 13 représente l'architecture de contrôle informatique de l'installation.

On a désigné par la référence 9 le micro-processeur (ou processeur) comprenant des mémoires et un logiciel adapté à la robotique.

Les références 90, 91, 92 et 93 représentent les appareils périphériques qui sont connectés au processeur, il s'agit notamment d'un clavier, d'un écran, d'une imprimante et d'un boîtier de commande manuelle.

Les références 94 et 95 représentent des cartes d'extension qui constituent l'interface du processeur avec l'installation.

L'interface 94 traite les informations relatives à l'état général de l'installation ; elle reçoit notamment les informations sur l'état des différentes butées telles que les butées escamotables 120 mentionnées plus haut, des informations provenant de cellules détectrices de présence des bacs aux postes de travail, des informations concernant le début, la fin et le résultat de la pesée.

L'interface 95 se rapporte à la surveillance et au pilotage proprement dit des robots.

On a désigné par les blocs 96A à 96D les circuits de commande et de contrôle de chacun des robots. Chaque circuit 96 comprend essentiellement un circuit 960 donnant la position axiale du robot (par information provenant du régulateur de contrôle) et la position des organes de préhension et d'éjection (doigt 71 et poussoir 35 pour le robot 3A).

Le circuit 961 est un circuit de puissance commandant les différents moteurs et vérins dont est équipé le robot concerné.

L'installation qui vient d'être décrite se prête à une bonne gestion de la production, notamment pour le traçage des lots, des fabrications, le contrôle du rendement des différents opérateurs affectés au désossage, au parage et au pièçage des viandes, ainsi que celui des fournisseurs des carcasses des viandes traitées.

Le contrôle du personnel est à la fois quantitatif et qualitatif.

Du fait qu'il n'y a pas de bandes de transport, les bacs sont recyclés en permanence par le système à l'état propre, seul les postes de travail étant susceptibles d'être souillés ; or leur conception en structure ouverte, sans mécanisme ni équipement électrique permet un nettoyage total rapide, avec un résultat visible immédiatement.

La voie de guidage du robot, bien que peu susceptible d'être salie ou polluée est elle-même lavable ; à cet égard on notera qu'il est possible de lui donner une longueur suffisante pour accueillir dans une zone de refuge le robot préhenseur en vue du lavage de la voie.

En cas de problème de fonctionnement du robot, il est possible de l'extraire facilement à l'extrémité de la voie de roulement, et de lui substituer très rapidement un mobile de secours, ce qui permet de ne pas arrêter la production.

Bien que l'installation ait été décrite en liaison avec le travail de la viande, il va de soi qu'elle peut trouver application dans différents domaines de la technique, par exemple lorsqu'il s'agit de récupérer, sur des appareils usagés, certaines pièces, qu'il faut trier, par exemple en vue du recyclage de certaines d'entre elles.

Dans le mode de réalisation du robot 3A qui a été décrit, on a prévu des moyens de commande spécifiques - en l'occurence un vérin 72 - pour faire passer le doigt d'accrochage 71 de sa position escamotée à sa position active, et vice-versa. Si les postes de tri sont tous placés du même côté de la voie de guidage du robot, ces moyens ne sont pas nécessaires. En effet, il suffit alors de prévoir un doigt d'accrochage sous forme de cliquet pivotant ou coulissant, qui s'escamote automatiquement dans un sens (à l'aller) - par effet de rampe - lorsqu'il rencontre le bord du bac, et qui s'accroche à ce même bord lors de son déplacement en sens inverse (au retour) afin de transférer le bac sur le chariot.

Ce même principe peut être utilisé, mais en utilisant une paire de vénns sans tige accolés l'un à l'autre, si on a affaire à deux rangées latérales de postes de tri. Dans ce cas, chacun des vérins est affecté à l'une des rangées.

Par ailleurs, dans l'exemple décrit, l'entraînement du robot 3A se fait par un entraînement à pignon / crémaillère. Dans une variante, cet entraînement pourrait se faire par friction, au moyen d'un galet monté en bout d'arbre moteur et s'appliquant contre l'un des flancs de la voie de guidage. Dans ce cas, le chariot porterait un galet codeur, roulant également sur la voie de guidage et permettant de contrôler en permanence la position du chariot, même en cas de glissement du galet moteur par rapport à son flanc d'appui.

Les voies de guidage des robots ne sont pas nécessairement rectilignes ; elles pourraient être curvilignes (rails courbes).

Enfin, dans le cas où on a affaire à plusieurs robots travaillant à la suite les uns des autres, leurs axes de déplacement ne sont pas nécessairement dans le même plan vertical. Ils pourraient être décalés transversalement et/ou angulairement pour s'accomoder au mieux à la géographie du local qui les abrite.

## Revendications

1. Installation de prélèvement et de transfert de bacs d'au moins un poste de tri (A) vers des postes d'affectation (B), dans laquelle le poste de tri (A) comprend un plan de saisie (12) apte à recevoir côte-à-côte un ensemble de bacs (6) contenant des objets (60) de nature et/ou de catégone(s) différente(s), caracténsée par le fait qu'elle est contrôlée et gérée par un système informatique à micro-processeur ou processeur (9) et qu'elle comporte au moins un robot préhenseur (3) piloté par ce micro-processeur (9), qui est mobile sur une voie de guidage constituée par un rail (2) s'étendant le long du plan de saisie (12), et apte à y prélever individuellement lesdits bacs (6) et les transférer sélectivement vers les différents postes d'affectation (B), ledit robot (3) comprenant un chariot (31) qui porte un moteur électrique (37) à contrôle de position, assurant son déplacement le long du rail (2), ce chariot étant muni en outre d'un détecteur de proximité apte à provoquer son arrêt automatique en face d'un bac en attente sur le plan de saisie (12), en vue du prélèvement de ce bac, de telle sorte que l'endroit duquel est saisi le bac soit connu du système informatique par l'intermédiaire du moyen de contrôle de position dudit moteur électrique (37).

2. Installation selon la revendication 1, caractérisée par le fait qu'elle comprend au moins un moyen détecteur connecté au micro-processeur (9), qui permet de détecter que un ou plusieurs bac(s) se trouve(nt) présent(s) en position d'attente sur le plan de saisie (12).

3. Installation selon la revendication 1 ou 2, caractérisée par le fait que ledit rail (2) est rectiligne, ou sensiblement rectiligne, et que le poste de tn (A) comporte un plan de travail (1) et un plan (10) de pose des bacs, les bacs pleins étant déplacés du plan de pose (10) au plan de saisie (12) suivant une direction (Y) transversale, perpendiculaire à l'axe (XX') du rail (2).

4. Installation selon la revendication 3, caractérisée par le fait que ledit chariot (31) porte des galets de roulement (300, 301) assurant son maintien sans jeu et son guidage sur le rail (2).

5. Installation selon la revendication 3 ou 4, caractérisée par le fait que le chariot (31) est déplacé sur le rail (2) au moyen d'un pignon rotatif (38) entraîné par le moteur (37), qui engrène avec une crémaillère (22) solidaire du rail (2).

6. Installation selon l'une des revendications 3 à 5, caractérisée par le fait que ledit chariot (31) affecte la forme d'un plateau horizontal dont la face supérieure (310) est adaptée pour recevoir et supporter les bacs (6).

7. Installation selon la revendication 6, caracténsée par le fait que ledit chariot (31) comprend des moyens de chargement et de déchargement des bacs (6) sur ladite face réceptnce (310).

8. Installation selon la revendication 7, caractérisée par le fait que lesdits moyens de chargement (70) comprennent un doigt escamotable (71) mobile transversalement dans un plan horizontal situé au-dessus de ladite face (310), à une distance de celle-ci qui coïncide, au jeu d'escamotage près, à la hauteur des bacs (6), le chargement d'un bac sur le chariot se faisant par accrochage et traction du doigt (71) contre le bord supéneur du bac.

9. Installation selon la revendication 7 ou 8, caractérisée par le fait que lesdits moyens de déchargement consistent en un poussoir (35) axialement mobile.

10. Installation selon l'une des revendications 3 à 9, caractérisée par le fait que ledit poste de tri comporte un deuxième plan de pose (13) destiné à recevoir des bacs vides, et que ledit robot (3) est adapté pour ramener les bacs vides d'un poste d'affectation à ce deuxième plan de pose (13).

11. Installation selon l'une des revendications 1 à 10, caractérisée par le fait que ledit robot (3) est adapté pour retourner les bacs (6) en vue de leur vidage aux postes d'affectation (B).

12. Installation selon l'une des revendications 1 à 11, caracténsée par le fait qu'elle comporte un robot unique (3).

13. Installation selon l'une des revendications 1 à 11, caractérisée par le fait qu'elle comporte plusieurs robots (3A, 3B, 3C, 3D), travaillant à la suite l'un de l'autre.

14. Installation selon la revendication 13, caractérisée par le fait qu'elle comporte un premier robot (3A) prélevant les bacs (6) aux postes de tn (A) et les amenant à un poste de pesée (4) et un second robot (3B) qui les transfère du poste de pesée (4) aux postes d'affectation (B).

15. Installation selon l'une des revendications 1 à 14, caractérisée par le fait que le poste de tri est un poste de désossage, de parage et/ou de pièçage de viandes. les objets (60) étant des morceaux de viande qui sont répartis dans les bacs (6) en fonction de leur nature par un opérateur (O).

## Patentansprüche

1. Anlage zum Entnehmen und Fördern von Behältern von mindestens einer Sortierstation (A) zu einer Verteilerstation (B), bei der die Sortierstation (A) eine Aufnahmeebene (12) enthält, welche eine Reihe von Seite an Seite angeordneten Behältern (6) aufnehmen kann, welche Gegenstände (60) unterschiedlicher Art und/oder Kategorie enthalten,
**dadurch gekennzeichnet, daß** sie von einem Computer mit einem Mikroprozessor oder Prozessor (9) kontrolliert und gesteuert wird, und daß sie mindestens einen durch den Mikroprozessor (9) gesteuerten Roboter (3) enthält, welcher auf einem Führungspfad beweglich ist, der aus einer Schiene (2) besteht, die entlang der Aufnahmeebene (12) verläuft, und der dafür ausgelegt ist, die Behälter (6) einzeln zu entnehmen und sie wahlweise an die verschiedenen Verteilerstationen (B) zu befördern, und dadurch, daß dieser Roboter (3) einen Förderkarren (31) aufweist, welcher mit einem elektrischen Motor (37) für die Positionskontrolle ausgestattet ist, der seine Verschiebung entlang der Schiene (2) gewährleistet, und dadurch, daß dieser Förderkarren außerdem mit einem Abstandsglied ausgestattet ist, das ihn automatisch vor einem auf der Aufnahmeebene (12) wartenden Behälter anhält, um diesen Behälter aufzunehmen, so daß die Stelle, an der der Behälter aufgenommen wird, dem Computer durch das Mittel für die Positionskontrolle des elektrischen Motors (37) übermittelt wird.

2. Anlage nach Anspruch 1,
**dadurch gekennzeichnet, daß** sie mindestens einen an den Mikroprozessor (9) angeschlossenen Detektor enthält, welcher es erlaubt, einen oder mehrere Behälter aufzufinden, welche sich in Wartestellung auf der Aufnahmeebene (12)befinden.

3. Anlage nach einem der Ansprüche 1 oder 2,
**dadurch gekennzeichnet, daß** die Schiene (2) geradlinig oder weitgehend geradlinig ausgebildet ist, und daß die Sortierstation (A) eine Arbeitsfläche (1) und eine Ablagefläche (10) für die Behälter aufweist, und daß die vollen Behälter von der Ablagefläche (10) an die Aufnahmeebene (12) in Querrichtung (Y) senkrecht zur Achse (XX') der Schiene (2) befördert werden.

4. Anlage nach Anspruch 3,
**dadurch gekennzeichnet, daß** der Förderkarren (31) Transportrollen (300, 301) aufweist, welche seine spielfreie Halterung und seine Führung auf der Schiene (2) gewährleisten.

5. Anlage nach einem der Ansprüche 3 oder 4,
**dadurch gekennzeichnet, daß** der Förderkarren (31) auf der Schiene (2) mit Hilfe eines von einem Motor (37) angetriebenen rotierenden Ritzels (38) bewegt wird, welches in eine mit der Schiene (2) fest verbundene Zahnstange (22) eingreift.

6. Anlage nach einem der Ansprüche 3 bis 5,
**dadurch gekennzeichnet, daß** der Förderkarren (31) die Form einer horizontalen Platte hat, deren Oberseite (310) für die Aufnahme und Halterung der Behälter (6) ausgelegt ist.

7. Anlage nach Anspruch 6,
**dadurch gekennzeichnet, daß** der Förderkarren (31) Mittel für das Aufladen und Abladen der Behälter (6) auf die Aufnahmefläche (310) aufweist.

8. Anlage nach Anspruch 7,
**dadurch gekennzeichnet, daß** die Auflademittel (70) einen einklappbaren Zapfen (71) aufweisen, welcher quer in einer horizontalen Ebene beweglich ist, die über der Fläche (310) in einem Abstand angeordnet ist, welche, abgesehen von dem Spiel der Einklappung, mit der Höhe der Behälter (6) übereinstimmt, und dadurch, daß die Aufladung eines Behälters auf den Förderkarren durch Einhaken und Ziehen (71) des Zapfens an der Oberkante des Behälters erfolgt.

9. Anlage nach einem der Ansprüche 7 oder 8,
**dadurch gekennzeichnet, daß** diese Mittel für die Aufladung aus einem axial beweglichen Vordrücker (35) bestehen.

10. Anlage nach einem der Ansprüche 3 bis 9,
**dadurch gekennzeichnet, daß** die Sortierstation zwei Ablageflächen (13) für leere Behälter enthält, und daß der Roboter (3) die leeren Behälter von einem Verteilerposten zu der zweiten Ablagefläche (13) zurückbefördert.

11. Anlage nach einem der Ansprüche 1 bis 10,
**dadurch gekennzeichnet, daß** der Roboter (3) dafür ausgelegt ist, die Behälter (6) für ihre Entleerung an die Verteilerstationen (B) zurückzuführen.

12. Anlage nach einem der Ansprüche 1 bis 11,
**dadurch gekennzeichnet, daß** sie einen einzigen Roboter (3) enthält.

13. Anlage nach einem der Ansprüche 1 bis 11,
**dadurch gekennzeichnet, daß** sie mehrere Roboter (3A, 3B, 3C, 3D) aufweist, die in Reihe geschaltet sind.

14. Anlage nach Anspruch 13,
**dadurch gekennzeichnet, daß** sie einen ersten Roboter (3A) aufweist, welcher die Behälter (6) an den Sortierstationen (A) aufnimmt und sie zu einer Wägestation (4) befördert, und daß sie einen zweiten Roboter (3B) aufweist, welcher sie von der Wägestation (4) an die Verteilerstationen (B) befördert.

15. Anlage nach einem der Ansprüche 1 bis 14,
**dadurch gekennzeichnet, daß** die Sortierstation eine Station für die Entbeinung, das Zerschneiden und/oder die Zerstückelung von Fleisch ist und daß die Gegenstände (60) Fleischstücke sind, welche von einem Arbeiter (O) je nach ihrer Art in die Behälter (6) eingefüllt werden.

## Claims

1. Installation for picking up and transferring trays from at least one sorting station (A) to allocation stations (B), in which installation the sorting station (A) comprises a pick-up surface (12) capable of accommodating side by side a set of trays (6) containing objects (60) of differing nature and/or category, characterized in that it is controlled and managed by a computer system with a microprocessor or processor (9) and in that it comprises at least one gripping robot (3) driven by this microprocessor (9) which can move along a guide track consisting of a rail (2) extending along the pick-up surface (12) and capable of picking up the said trays (6) individually therefrom and transferring them selectively to the various allocation stations (B), the said robot (3) comprising a truck (31) which has a position-control electric motor (37) that makes it travel along the rail (2), this truck furthermore being fitted with a proximity detector capable of making it stop automatically opposite a waiting tray on the pick-up surface (12) with a view to picking up this tray in such a way that the point from which the tray is picked up is known to the computer system via the position-control means of the said electric motor (37).

2. Installation according to Claim 1, characterized in that it comprises at least one detector means connected to the microprocessor (9), which makes it possible to detect that there is or are one or more tray or trays waiting on the pick-up surface (12).

3. Installation according to Claim 1 or 2, characterized in that the said rail (2) is straight or approximately straight, and in that the sorting station (A) comprises a work surface (1) and a surface (10) on which trays can be set down, the full trays being moved from the set-down surface (10) to the pick-up surface (12) in a transverse direction (Y) perpendicular to the axis (XX') of the rail (2).

4. Installation according to Claim 3, characterized in that the said truck (31) has rollers (300, 301) which hold it in position without play and guide it along the rail (2).

5. Installation according to Claim 3 or 4, characterized in that the truck (31) is moved along the rail (2) by means of a rotating pinion (38) driven by the motor (37) and meshing with a rack (22) securely attached to the rail (2).

6. Installation according to one of Claims 3 to 5, characterized in that the said truck (31) takes the form of a horizontal plate, the upper face (310) of which is designed to receive and support the trays (6).

7. Installation according to Claim 6, characterized in that the said truck (31) comprises means for loading and unloading the trays (6) on the said receiving face (310).

8. Installation according to Claim 7, characterized in that the said loading means (70) comprise a retractable pin (71) that can move transversely in a horizontal plane situated above the said face (310) at a distance therefrom that coincides, not including the retraction travel, to the height of the trays (6), a tray being loaded onto the truck by means of the pin (71) catching on and pulling the top edge of the tray.

9. Installation according to Claim 7 or 8, characterized in that the said unloading means consist of an axially mobile pusher (35).

10. Installation according to one of Claims 3 to 9, characterized in that the said sorting station comprises a second set-down surface (13) intended to receive empty trays and in that the said robot (3) is designed to return the empty trays from an allocation station to this second set-down surface (13).

11. Installation according to one of Claims 1 to 10, characterized in that the said robot (3) is designed to invert the trays (6) so as to empty them at the allocation stations (B).

12. Installation according to one of Claims 1 to 11, characterized in that it comprises just one robot (3).

13. Installation according to one of Claims 1 to 11, characterized in that it comprises several robots (3A, 3B, 3C, 3D) working one after the other.

14. Installation according to Claim 13, characterized in that it comprises a first robot (3A) that picks up the trays (6) at the sorting stations (A) and conveys them to a weighing station (4) and a second robot (3B) which transfers them from the weighing station (4) to the allocation stations (B).

15. Installation according to one of Claims 1 to 14, characterized in that the sorting station is a station for boning, trimming and/or portioning meat, the objects (60) being pieces of meat which are distributed into the trays (6) according to their type by an operator (O).
